# EUROPÄISCHE PATENTSCHRIFT

(11) **EP 1 109 692 B1**
(45) Veröffentlichungstag und Bekanntmachung des Hinweises auf die Patenterteilung: **16.01.2002**
(21) Anmeldenummer: 99968230.5
(22) Anmeldetag: 01.09.1999
(51) Int. Cl.: B60J 7/10

(54) **TRAGPFOSTENANSCHLUSS**
CONNECTION FOR LOAD CARRYING UPRIGHT
RACCORD DE MONTANT PORTEUR

(30) Priorität: 01.09.1998 DE 19839768
(43) Veröffentlichungstag der Anmeldung: 27.06.2001
(73) Patentinhaber: Edscha LKW-Schiebeverdecke GmbH, 42855 Remscheid (DE)
(72) Erfinder: FLIEGE, Dieter, D-42855 Remscheid (DE); REMMEL, Roger, D-42879 Remscheid (DE); DRASCH, Josef, D-94577 Winzer (DE)
(74) Vertreter: Sparing, Rolf Klaus
(86) Internationale Anmeldenummer: DE9902822
(87) Internationale Veröffentlichungsnummer: WO0012339

(56) Entgegenhaltungen:
- DE-A- 2 718 674
- DE-U- 9 309 137
- US-A- 3 556 569

## Beschreibung

Die Erfindung betrifft einen Tragpfostenanschluß nach dem Oberbegriff des Anspruchs 1.

Die gattungsbildende DE-U-93 09 137 zeigt eine Tragpfostenkupplung für Verdeckgestelle von Lastkraftwagen und Anhängern, bei der eine Steckriegeleinrichtung ein lösbar an der Oberseite eines Tragpfostens angeordnetes Anschlußprofil in dessen parallel zu einer Seitenwand eines der oberen Gurte vorgesehene Ausnehmung durchsetzt. Hierbei sind die Riegeleinrichtungen selbst als federbeaufschlagte Schnappteile ausgebildet.

Aus der Praxis bekannte, zum Tragen einer den Laderaum überdeckenden Plane bestimmte Verdeckgestelle von Lastkraftwagen und Anhängern bestehen üblicherweise aus oberen Längsgurten und gegebenenfalls an den Stirnseiten des Verdeckgestells angeordneten Quergurten und einer Anzahl aufragender Tragpfosten, welche die Längs- und Quergurten des Verdeckgestelles gegen die Ladeplattform des Lastkraftwagens oder Anhängers abstützen. Dabei umfaßt das Verdeckgestell wenigstens vier an den Ecken der Ladeplattform angeordnete Tragpfosten und sind je nach der Länge der zu überdeckenden Ladeplattform gegebenenfalls auch über die Seitenlängen des Verdeckgestells hin verteilt zusätzliche Tragpfosten angeordnet. Beim Beladen oder Entladen des Fahrzeuges, insbesondere mittels Stapler sind die Tragpfosten jedoch häufig behindernd, so daß sie während des Be- oder Entladevorganges vorübergehend abgenommen werden müssen.

DE-A-27 18 674 beschreibt eine bekannte Tragpfostenkupplung, die jedoch aufwendig in Anordnung und Bedienung ist.

Aus der Praxis sind weitere Ausgestaltungen von lösbaren Verbindungen zwischen Tragpfosten und Längsgurten eines Verdeckgestells bekannt, die zwar ein Abnehmen und ein Wiedereinsetzen der Tragpfosten ermöglichen, sich aber jeweils entweder durch eine besondere konstruktive Aufwendigkeit oder aber durch eine schwierige bzw. umständliche Handhabung auszeichnen.

Bei einer aus der Praxis bekannten Bauart einer lösbaren Verbindung zwischen dem Längsgurt des Verdeckgestells und einem Tragpfosten ist beispielsweise vorgesehen, daß der Tragpfosten nur durch überwinden einer Federkraft horizontal und vertikal vom Längsgurt des Verdeckgestells abnehmbar ist. Angesichts des Gewichtes des Tragpfostens und ferner angesichts des Umstandes, daß die oberen Längsgurten des Verdeckgestells in einer beträchtlichen Höhe oberhalb der Ladeplattform angeordnet und somit von der Ladeplattform aus nicht oder wenigstens nur sehr schwer zugänglich sind, gestaltet sich das Abnehmen und Wiedereinsetzen der Tragpfosten bei dieser bekannten Bauart einer Tragpfosten-Längsgurtverbindung zumindest schwierig und hinsichtlich der Bedienperson kraftaufwendig.

Es ist die Aufgabe der Erfindung, einen Tragpfostenanschluß nach dem Oberbegriff des Anspruchs 1 zu schaffen, der in sicherer und einfacher Weise das Abnehmen und Wiedereinsetzen eines Tragpfostens in den Verband des Verdeckgestells ermöglicht.

Diese Aufgabe wird bei dem eingangs genannten Tragpfostenanschluß erfindungsgemäß mit den kennzeichnenden Merkmalen des Anspruchs 1 gelöst.

Die erfindungsgemäße Gestaltung des Anschlusses des Tragpfostens an den oberen Längs- bzw. Quergurt des Verdeckgestells als Steckriegeleinrichtung gewährleistet eine sowohl in horizontaler als auch in vertikaler Richtung rein formschlüssige Verbindung des Tragpfostens mit dem Längsgurt und bietet damit selbst im Fahrbetrieb eine absolute Sicherheit der Verbindung gegen ein unbeabsichtigtes selbsttätiges Lösen. Darüber hinaus zeichnet sich eine als Steckriegeleinrichtung gestaltete Verbindung zwischen Tragpfosten und Längsgurt durch eine einfache Handhabung aus, dahingehend, daß für das Einsetzen und Ausheben des Tragpfostens aus dem Verband des Verdeckgestells keinerlei Federkräfte oder dgl. überwunden werden müssen. Schließlich eröffnet die Gestaltung der Verbindung zwischen oberem Längs- bzw. Quergurt und Tragpfosten als Steckverbindung in besonderer Weise Möglichkeiten für eine Verringerung des Gesamtgewichtes des Verdeckgestells. Die Erfindung schafft eine Lösung, mittels derer Tragpfosten bei absoluter Sicherheit der Verbindung zwischen Längs- bzw. gegebenenfalls Quergurt des Verdeckgestells und montiertem Tragpfosten in einfachster Weise in den Verband des Verdeckgestells einsetzbar sind und welche trotzdem noch so flach gestaltet ist, daß die Plane nicht gestört wird.

In einer besonders bevorzugten Verwirklichungsform eines solchen als Steckverbindung ausgestalteten lösbaren Anschlusses eines Tragpfostens an ein Verdeckgestell ist weiter vorgesehen, daß das Anschlußprofil nicht nur die einfachste L-förmige Querschnittsform sondern eine ungleichschenkelig U-förmige Querschnittsform aufweist, bei welcher einem die zweite der Steckriegeleinrichtung zugeordnete Anlagefläche bildenden längeren ein kürzerer Profilschenkel gegenüberliegt.

Der Bügel ist dabei durch einen in seinem mittleren Bereich nach außen durchgebogenen sowie mit einer Duchgangsbohrung für den Steckriegel versehenen und im Bereich jedes seiner beiden Enden mittels Verschraubung mit dem Längs- bzw. Quergurt des Verdeckgestells verbundenen Flachmaterialzuschnitt gebildet. Der Spaltraum vereinfacht das Wiedereinführen der Tragpfosten durch den hierdurch erkennbar gebildeten Einführschlitz.

Dabei ergibt sich eine besonders vorteilhafte, weil flachbauende Bauweise daraus, daß die dem Steckriegel zugeordnete Feder als Blattfeder ausgebildet und beidendig mittels Nietung an dem Bügel gehalten ist. Eine solche dem Steckriegel zugeordnete Blattfeder steht in einer zweckmäßigen Gestaltungsweise einerseits vermittels einer in diesem ausgebildeten Umfangsnut bleibend und formschlüssig mit dem Steckriegel im Eingriff und ist andererseits mit wenigstens einer Nietung über eine Langlochausnehmung verbunden ist.

Eine im Hinblick auf die Betriebssicherheit des Tragpfostenanschlusses besonders vorteilhafte Maßnahme besteht darin, daß die wenigstens einer Nietung zugeordnete Langlochausnehmung der Blattfeder derart bemessen ist, daß eine Überdehnung der Blattfeder beim Entriegeln des Tragpfostenanschlusses ausgeschlossen ist.

Schließlich ist noch zweckmäßigerweise vorgesehen, daß der zapfenförmig ausgebildete Steckriegel mit einer Handhabe versehen ist und daß diese Handhabe vorzugsweise durch einen eine Bohrung im Riegelkörper durchsetzenden Ring gebildet ist.

Weitere Vorteile und Merkmale der Erfindung ergeben sich aus der nachfolgenden Beschreibung sowie aus den Unteransprüchen.

Die Erfindung wird nachstehend unter Bezugnahme auf die anliegenden Zeichnungen anhand eines bevorzugten Ausführungsbeispiels näher erläutert.

Fig. 1 zeigt perspektivische Ansicht eines Verdeckgestells für einen Lastkraftwagen.

Fig. 2 zeigt ausschnittsweise eine Seitenansicht eines bevorzugten Ausführungsbeispiels eines erfindungsgemäßen Tragpfostenanschlusses.

Fig. 3 zeigt eine Draufsicht auf den Tragpfostenanschluß aus Fig. 2.

Fig. 4 zeigt einen Querschnitt des Tragpfostenanschlusses aus Fig. 2 und 3 entlang der Linie IV - IV in Fig. 2.

Fig. 5 zeigt eine vergrößerte Ansicht der Einzelheit V aus Fig. 3.

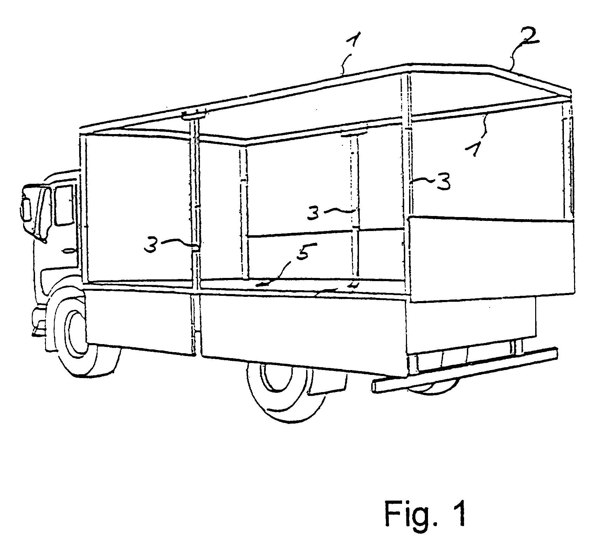

Das in Fig. 1 schematisch dargestellte Verdeckgestell eines Lastkraftwagens umfaßt horizontal ausgerichtete obere Längsgurte 1 und Quergurten 2 sowie diese tragende, vertikal ausgerichtete Tragpfosten 3, welche unterendig gegen Längsholme 4 einer Ladeplattform 5 abgestützt sind. Zur Verbindung der Tragpfosten 3 mit den Längsgurten 1 des Verdeckgestells ist teils am oberem Ende der Tragpfosten 3 und teils an den Längsgurten 1 jeweils ein Teil einer Steckriegeleinrichtung 7,8 vorgesehen.

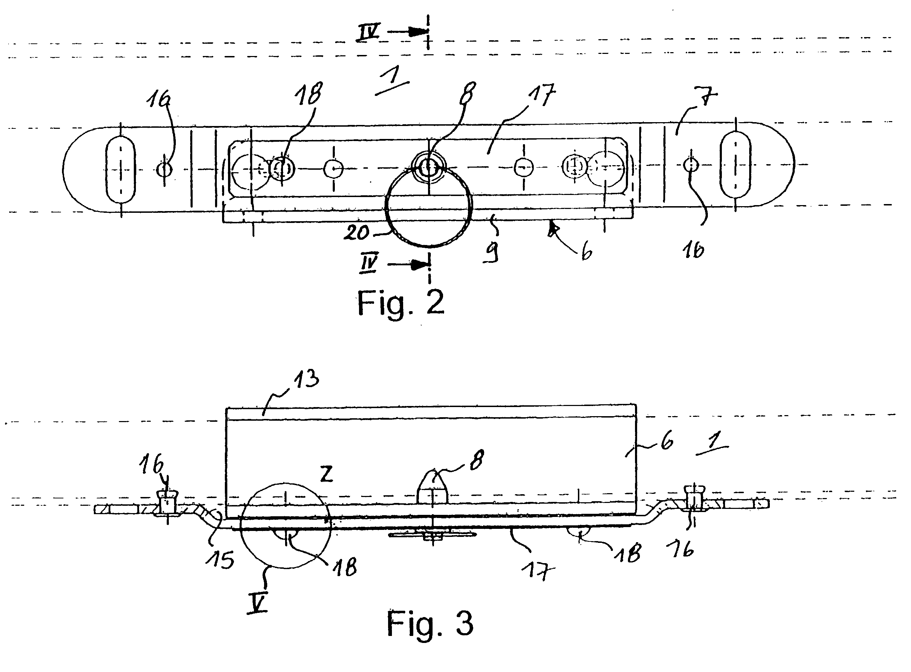

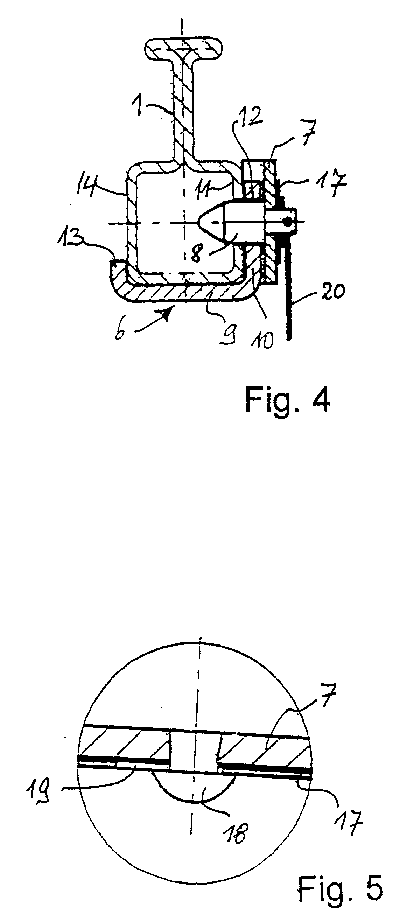

Die Steckriegeleinrichtung 7,8, die in den Fig. 2 bis 4 besonders gut zu erkennen ist, besteht dabei im wesentlichen jeweils aus einem unlösbar an das obere Ende des Tragpfostens 3 angeschlossenen Anschlußprofil 6 und einem an den Längsgurt 1 angeschlossenen Bügel 7 sowie einem zapfenförmigen Steckriegel 8. Das Anschlußprofil 6 weist eine U-förmige Querschnittsform auf, deren Profilgrund 9 eine erste parallel zur Unterseite des oberen Längsgurtes 1 ausgerichtete Anlagefläche und deren einer Profilschenkel 10 eine zweite parallel zu einer Seitenwand 11 des oberen Längsgurtes 1 ausgerichtete, eine Ausnehmung 12 für den Durchtritt des Steckriegels 8 aufweisende Anlagefläche bildet und deren zweiter Profilschenkel 13 eine dritte parallel zur anderen Seitenwand 14 des oberen Längsgurtes 1 ausgerichtete Anlagefläche bildet. Der Längsgurt 1 ist in den Fig. 2 und 3 zum besseren Verständnis der Darstellung gestrichelt eingezeichnet.

Der Bügel 7 schließt mit der außen liegenden Seitenwand 11 des oberen Längsgurtes 1 einen zur Aufnahme des die parallel zur Seitenwand 11 des oberen Längsgurtes ausgerichtete Anschlußfläche bildenden Profilschenkels 10 des Anschlußprofils 6 geeigneten Spaltraum 15 ein und ist mit einer Durchgangsbohrung für den Steckriegel 8 versehen. Der Bügel 7 ist durch einen in seinem mittleren Bereich nach außen durchgebogenen sowie mit einer Duchgangsbohrung für den Steckriegel 8 versehenen und im Bereich jedes seiner beiden Enden mittels Verschraubung 16 mit dem Längsgurt 1 des Verdeckgestells verbundenen Flachmaterialzuschnitt gebildet. Der zapfenförmige Steckriegel 8 ist in Einrückrichtung durch eine Blattfeder 17 belastet, welche beidendig mittels Nietung 18 an dem Bügel 7 gehalten ist. Die Blattfeder 17 steht mit dem Steckriegel 8 über eine in diesem angeordnete Umfangsnut im formschlüssigen Eingriff und ist andererseits mit wenigstens einer der beiden Nietungen 18 über eine Langlochausnehmung 19 verbunden.

Die wenigstens einer Nietung 18 zugeordnete Langlochausnehmung 19 der Blattfeder 17 ist derart bemessen, daß eine Überdehnung der Blattfeder 17 beim Herausziehen des Steckriegels 8 zum Entriegeln des Tragpfostenanschlusses ausgeschlossen ist. Der zapfenförmig ausgebildete Steckriegel 8 ist mit einer Handhabe versehen, welche in der gezeigten Ausführungsform durch einen eine Bohrung im Riegelkörper durchsetzenden Ring 20 gebildet ist.

Die Erfindung ist vorstehend anhand des Ansschlusses eines Tragpfostens an einen Längsgurt 1 dargestellt worden. Es versteht sich, daß in entsprechender Weise auch ein Anschluß an einen Quergurt 2 realisierbar ist.

## Patentansprüche

1. Tragpfostenanschluß für Verdeckgestelle von Lastkraftwagen und Anhängern, deren oberer Längsgurt (1) bzw. Quergurt (2) über wenigstens einen aufragenden Tragpfosten (3) gegen eine Ladeplattform (5) abgestützt ist, wobei der Tragpfosten (3) oberendig eine Einrichtung zum Verbinden mit den oberen Gurten (1, 2) des Verdeckgestells mit einem Profilabschnitt aufweist, umfassend ein winkelförmiges, mit dem Tragpfosten (3) verbundenes Anschlußprofil (6) und eine Steckriegeleinrichtung (7,8), wobei das Anschlußprofil (6) eine erste, parallel zur Unterseite des oberen Längsgurtes (1) bzw. Quergurtes (2) gerichtete Anlagefläche (9) und eine zweite, parallel zu einer Seitenwand (11) des oberen Gurtes (1, 2) gerichtete Anlagefläche (10) aufweist, wobei die zweite Anlagefläche (10) eine Ausnehmung (12) für den Durchtritt eines zapfenförmigen Steckriegels (8) und eine diesen in Einrückrichtung belastenden Feder (17) aufweist,
**dadurch gekennzeichnet,**
**daß** das Anschlußprofil (6) unlösbar mit dem Tragpfosten (3) verbunden ist, und
**daß** die Steckriegeleinrichtung (7,8) einen mit der außen liegenden Seitenwand (11) des oberen Gurtes (1,2) zur Aufnahme des die parallel zur Seitenwand (11) des oberen Gurtes (1, 2) ausgerichtete Anschlußfläche bildenden Profilschenkels (10) des Anschlußprofils (6) geeigneten Spaltraum (15) einschließenden und mit einer Durchgangsbohrung für den Steckriegel (8) versehenen, als Flachmaterialzuschnitt ausgebildeten Bügel (7) umfaßt.

2. Tragpfostenanschluß nach Anspruch 1, **dadurch gekennzeichnet, daß** der Bügel (7) durch einen in seinem mittleren Bereich nach außen durchgebogenen und im Bereich jedes seiner beiden Enden mittels Verschraubung (16) mit dem entsprechenden Gurt (1) des Verdeckgestells verbundenen Flachmaterialzuschnitt gebildet ist.

3. Tragpfostenanschluß nach Anspruch 1 oder 2, **dadurch gekennzeichnet, daß** die dem Steckriegel (8) zugeordnete Feder als Blattfeder (17) ausgebildet und beidendig mittels Nietungen (18) an dem Bügel (7) gehalten ist.

4. Tragpfostenanschluß nach Anspruch 3, **dadurch gekennzeichnet, daß** die dem Steckriegel (8) zugeordnete Blattfeder (17) einerseits formschlüssig mit diesem im Eingriff steht und andererseits mit wenigstens einer der Nietungen (18) über eine Langlochausnehmung (19) verbunden ist.

5. Tragpfostenanschluß nach Anspruch 4, **dadurch gekennzeichnet, daß** die wenigstens einer Nietung (18) zugeordnete Langlochausnehmung (19) der Blattfeder (17) derart bemessen ist, daß eine Überdehnung der Blattfeder (17) beim Lösen des Steckriegels (8) ausgeschlossen ist.

6. Tragpfostenanschluß nach einem der Ansprüche 1 bis 5, **dadurch gekennzeichnet, daß** der Steckriegel (8) mit einer Handhabe (20) versehen ist

7. Tragpfostenanschluß nach Anspruch 6, **dadurch gekennzeichnet, daß** die Handhabe durch einen eine Bohrung im Riegelkörper durchsetzenden Ring (20) gebildet ist.

8. Tragpfostenanschluß nach einem der Ansprüche 1 bis 7, **dadurch gekennzeichnet, daß** das Anschlußprofil (6) eine ungleichschenkelig U-förmige Querschnittsform aufweist, bei welcher einem die zweite, der Steckriegeleinrichtung (7,8) zugeordnete Anlagefläche bildenden längeren (10) ein kürzerer (13) Profilschenkel gegenüberliegt.

9. Tragpfostenanschluß nach einem der Ansprüche 1 bis 8, **dadurch gekennzeichnet, daß** der Tragpfosten (3) ferner eine Einrichtung zum Verbinden mit den Längsholmen (4) der Ladeplattform aufweist.

## Claims

1. Supporting-post connection for canopy-top frames of lorries and trailers, whose upper longitudinal boom (1) or transverse boom (2) is supported against a loading platform (5) via at least one upwardly protruding supporting post (3), the top end of the supporting post (3) having a device for the connection to the upper booms (1, 2) of the canopy-top frame, having a profile section comprising an angular connecting profile (6) connected to the supporting post (3), and a plug-in bolt device (7, 8), the connecting profile (6) having a first bearing surface (9) which is orientated parallel to the lower side of the upper longitudinal boom (1) or transverse boom (2), and a second bearing surface (10) which is orientated parallel to a side wall (11) of the upper boom (1, 2), the second bearing surface (10) having a recess (12) for the passage of a stud-shaped plug-in bolt (8), and a spring (17) which stresses said plug-in bolt in the direction of engagement, **characterized in that** the connecting profile (6) is connected nonreleasably to the supporting post (3), and **in that** the plug-in bolt device (7, 8) contains a bracket (7) which is designed as a flat material blank, encloses, together with the outer side wall (11) of the upper boom (1, 2), a gap (15) suitable for accommodating that profile leg (10) of the connecting profile (6) which forms the connecting surface orientated parallel to the side wall (11) of the upper boom (1, 2), and is provided with a through-hole for the plug-in bolt (8).

2. Supporting-post connection according to Claim 1, **characterized in that** the bracket (7) is formed by a flat material blank which is bent outwards in its central region, and in the region of each of its two ends is connected to the corresponding boom (1) of the canopy-top frame by means of a screw connection (16).

3. Supporting-post connection according to Claim 1 or 2, **characterized in that** the spring assigned to the plug-in bolt (8) is designed as a leaf spring (17) and is held at both ends on the bracket (7) by means of rivet joints (18).

4. Supporting-post connection according to Claim 3, **characterized in that** the leaf spring (17) assigned to the plug-in bolt (8) is in engagement with the latter in a form-fitting manner at one end and at the other end is connected to at least one of the rivet joints (18) via a slot-type recess (19).

5. Supporting-post connection according to Claim 4, **characterized in that** the slot-type recess (19) of the leaf spring (17), which recess is assigned to at least one rivet joint (18), is dimensioned in such a manner that the leaf spring (17) is prevented from overstretching when the plug-in bolt (8) is released.

6. Supporting-post connection according to one of Claims 1 to 5, **characterized in that** the plug-in bolt (8) is provided with a handle (20).

7. Supporting-post connection according to Claim 6, **characterized in that** the handle is formed by a ring (20) passing through a hole in the bolt body.

8. Supporting-post connection according to one of Claims 1 to 7, **characterized in that** the connecting profile (6) has a cross-sectional form which is U-shaped with unequal legs, in which a shorter profile leg (13) lies opposite a longer profile leg (10) forming the second bearing surface assigned to the plug-in bolt device (7, 8).

9. Supporting-post connection according to one of Claims 1 to 8, **characterized in that** the supporting post (3) further has a device for the connection to the longitudinal struts (4) of the loading platform.

## Revendications

1. Dispositif de raccordement pour montant porteur pour des châssis de capotes ou bâches de camions et de remorques, dont la membrure longitudinale (1) supérieure ou la membrure transversale (2) supérieure est soutenue contre une plate-forme de chargement (5) par l'intermédiaire d'au moins un montant porteur (3) dressé, le montant porteur (3) présentant à une extrémité supérieure un dispositif de liaison à la membrure supérieure (1) du châssis de capote ou bâche, ayant un tronçon profilé, comprenant un profilé de raccordement (6) à forme angulaire, relié au montant porteur (3), et un dispositif de verrouillage à emboîtement (7, 8), le profilé de raccordement (6) présentant une première surface d'appui (9), orientée parallèlement à la surface inférieure de la membrure longitudinale supérieure (1) ou de la membrure transversale (2), et une deuxième surface d'appui (10) orientée parallèlement à une paroi latérale (11) de la membrure supérieure (1, 2), la deuxième face d'appui (10) présentant un évidement (12), pour le passage d'un verrou à emboîtement (8) en forme de téton, et un ressort (17) chargeant celui-ci dans la direction de l'enclenchement,
**caractérisé en ce que**,
le profilé de raccordement (6) est relié de façon indésolidarisable au montant porteur (3), et
**en ce que** le dispositif de verrouillage à emboîtement (7, 8) comprend un étrier (7), réalisé sous forme de découpe de matériau plat, définissant, avec la paroi latérale (11), placée extérieurement, de la membrure supérieure (1, 2), un intervalle de jeu (15) convenant pour recevoir la branche de profilé (10), formant la face de raccordement, orientée parallèlement à la paroi latérale (11) de la membrure supérieure (1, 2), du profilé de raccordement (6), et l'étrier étant muni d'un perçage traversant, pour le verrou à emboîtement (8).

2. Dispositif de raccordement pour montant porteur selon la revendication 1, **caractérisé en ce que** l'étrier (7) est formé par une découpe de matériau plat, pliée de façon continue vers l'extérieur dans sa zone centrale et reliée, dans la zone de chacune de ses deux extrémités, au moyen d'un vissage (16), à la membrure (1) correspondante du châssis de bâche.

3. Dispositif de raccordement pour montant porteur selon la revendication 1 ou 2, **caractérisé en ce que** le ressort associé au verrou à emboîtement (8) est réalisé sous la forme de ressort à lame (17) et est maintenu aux deux extrémités sur l'étrier (7) à l'aide de rivetages (18).

4. Dispositif de raccordement pour montant porteur selon la revendication 3, **caractérisé en ce que** le ressort à lame (17) associé au verrou à emboîtement (8) est mis en prise avec celui-ci, d'une part, par une liaison à ajustement de forme et est, d'autre part, relié à au moins l'un des rivetages (18), par l'intermédiaire d'un évidement à trou oblong (19).

5. Dispositif de raccordement pour montant porteur selon la revendication 4, **caractérisé en ce que** l'évidement à trou oblong (19), associé à au moins un rivetage (18), du ressort à lame (17) est dimensionné de manière que toute extension excessive du ressort à lame (17) soit exclue lors du démontage du verrou à emboîtement (8).

6. Dispositif de raccordement pour montant porteur selon la revendication de 1 à 5, **caractérisé en ce que** le verrou à emboîtement (8) est muni d'une manette (20).

7. Dispositif de raccordement pour montant porteur selon la revendication 6, **caractérisé en ce que** la manette est formée par un anneau (20) traversant un perçage ménagé dans le corps de verrou.

8. Dispositif de raccordement pour montant porteur selon l'une des revendications 1 à 7, **caractérisé en ce que** le profilé de raccordement (6) présente une forme de section transversale en forme de U à branches inégales, forme pour laquelle une branche de profilé (10) longue, formant la deuxième face d'appui, associée au dispositif de verrouillage à emboîtement (7, 8), est placée à l'opposé d'une branche de profilé (13) courte.

9. Dispositif de raccordement pour montant porteur selon l'une des revendications 1 à 8, **caractérisé en ce que** le montant porteur (3) présente en outre un dispositif de liaison aux montants longitudinaux (4) de la plate-forme de chargement.
